Europäisches Patentamt

European Patent Office

Office européen des brevets

(19)

(11) Publication number: **0 162 983**

**A2**

# EUROPEAN PATENT APPLICATION

(21) Application number: **84307821.3**

(22) Date of filing: **12.11.84**

(51) Int. Cl.⁴: **F 41 F 1/02**

(30) Priority: **14.11.83 US 551754**

(43) Date of publication of application:
**04.12.85 Bulletin 85/49**

(84) Designated Contracting States:
**DE FR GB IT**

(71) Applicant: **WESTINGHOUSE ELECTRIC CORPORATION**
**Westinghouse Building Gateway Center**
**Pittsburgh Pennsylvania 15235(US)**

(72) Inventor: **Kemeny, George Alfred**
**141 Penhurst Drive**
**Pittsburgh Pennsylvania(US)**

(74) Representative: **van Berlyn, Ronald Gilbert**
**23, Centre Heights**
**London, NW3 6JG(GB)**

(54) **Capacitor-driven multi-stage electromagnetic launchers having augmenting rails.**

(57) An augmented rail, capactor driven, multi-stage electro-
magnetic launcher is provided with a pair of generally
parallel conductive projectile launching rails with one of the
rails being segmented to form a plurality of launcher stages.
A capacitive power supply is connected to each of the stages
to successively supply current as an armature enters each
respective stage. The augmenting conductors act to increase
projectile accelerating force and also as power conditioning
means. An alternative embodiment utilizes continuous pro-
jectile launching rails and successive capacitive power
supplies are switched to their respective stages when the
projectile armature reaches predetermined positions along
the launcher bore.

FIG. 1

1                                51,338

AUGMENTED RAIL CAPACITOR DRIVEN
MULTI-STAGE ELECTROMAGNETIC LAUNCHERS

This invention relates to electromagnetic projectile launchers and more particularly to multi-stage, augmented, parallel rail launchers which are capacitor driven.

Electromagnetic projectile launchers are capable of accelerating various types of projectiles to high velocities. Possible applications of electromagnetic launchers require that the launcher accelerate a projectile to ultra high velocities. For example, inertial fusion experimentation which involves the conversion of kinetic energy to obtain the temperatures and pressures required for fusion reactions, is estimated to have a minimum velocity requirement of at least 50 km/sec. A simple parallel rail launcher with the capability to attain and exceed such a velocity is likely to be hundreds of meters in length and, because of this length and to improve efficiency, would preferably utilize staged power supplies. In order to limit rail deterioration, the currents should be as low as possible and, for better efficiency, currents should only be conducted over relatively short distances. Multi-stage launchers have been proposed which limit the distance over which projectile launching currents must flow. U.S. Patent No. 4,343,223, issued August 10, 1982 to Hawke et al, discloses a multi-stage railgun. However, that railgun requires either the use of accurately timed switching to apply power to successive launcher stages or a

0162983

structure which extinguishes a driving arc at the end of each stage and means for initiating a new arc in each successive stage.

It is an object of this invention to provide an electromagnetic projectile launcher which reduces the required launch current, limits the distance over which launch current flows.

The invention resides broadly in an electromagnetic projectile launcher comprising:

a first pair of generally parallel conductive rails;

conductor magnet for conducting current between said first pair of rails in operation and for propelling a projectile along said rails;

one rail of said first pair of rails by segmented to form a plurality of launcher stages additional conductors for connection to a fleshtone power supply disposed in groups adjacent to at least one of said stages formed by said first pair of conductive rails and connected to said first pair of conductive rails such that current flow in each of said additional conductors is in the same direction as current flow in an adjacent one of said first pair of conductive rails.

An electromagnetic projectile launcher constructed in accordance with this invention comprises: a pair of generally parallel conductive projectile launching rails; means for conducting current between the rails and for propelling a projectile along the rails; and capacitive power supplies connected at staged locations along the rails to supply current to the means for conducting current as it passes through the launcher stages. The launcher stages may be formed by segmenting at least one of the conductive projectile lauching rails and connecting a capacitive power supply to each of the rail segments. Each capacitive power supply then discharges as the means for conducting current reaches its respective stage. Additional conductors may be disposed in groups adjacent to at least one of the stages to provide inductance needed for power conditioning and to augment the projectile propelling magnetic field. If augmenting conductors are not used, an inductor may be inserted in series with each capacitive power supply for power conditioning purposes.

Launchers constructed in accordance with this invention utilize a method of accelerating projectiles in a multi-stage, parallel rail launcher, which comprises the steps of: connecting a pair of augmenting conductors in series with a pair of projectile accelerating rails in at least one launcher stage, such that current flow through the augmenting conductors increases the magnetic field density between the projectile accelerating rails; and causing current to flow through the rails and augmenting conductors to propel a projectile within that launcher stage. This invention also encompasses launchers which utilize the propelling armature as a switch element to directly and successively self-trigger and synchronize the delivery of current to successive launcher stages from additional current sources. In an alternative embodiment where the projectile launching rails are not segmented, switching means must be provided to connect the capacitive power supplies to the successive launcher stages as the projectile reaches particular points along the projectile launching rails.

Figure 1 is a schematic of an electromagnetic projectile launcher constructed in accordance with one embodiment of the present invention;

Figure 2 is a graph of the currents present in the launcher of Figure 1 during a launch;

Figure 3 is a schematic diagram of an alternative embodiment of the present invention;

Figure 4 is a schematic diagram of another alternative embodiment of the present invention; and

Figure 5 is a cross sectional view of projectile launching and augmenting rails which may be used in the launchers of Figures 1 and 4.

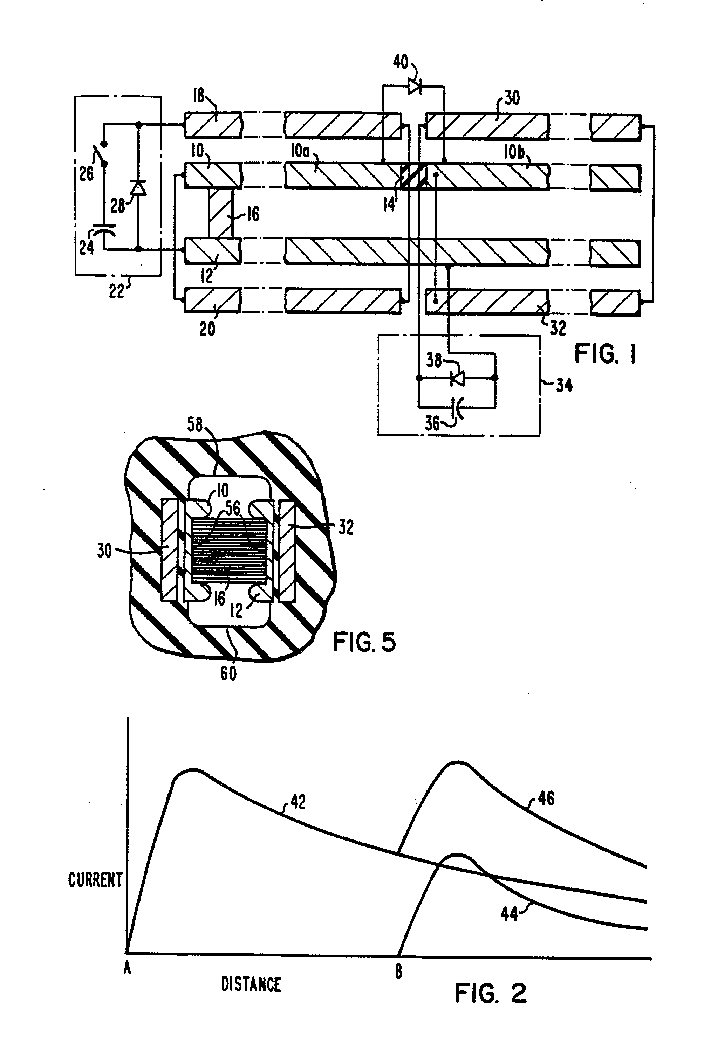

Referring to the drawings, Figure 1 is a schematic diagram of an electromagnetic projectile launcher constructed in accordance with one embodiment of the present invention. This embodiment includes a pair of generally parallel conductive projectile launching rails 10 and 12. Rail 10 is segmented into segments 10a and 10b in the first and second stages of the launcher respectively. These segments are separated by insulation 14. One surface of insulation 14, which lines the launcher bore, conforms to the bore surface of rail 10, which confronts the bore surface of rail 12. A conventional metallic or plasma armature 16 serves as means for conducting current between projectile launching rails 10 and 12 and for propelling a projectile along the rails.

Augmenting conductors 18 and 20 are disposed adjacent to rail segment 10a and a portion of rail 12 in the first stage of the launcher, and connected to carry current in the same direction as the adjacent projectile launching rail. This augmenting and parallel current flow serves to increase the magnetic flux density between the projectile launching rails. A capacitive power supply 22, including the series connection of a capacitor bank 24 and firing switch 26, and a rectifier array 28 which serves as a crowbar device, is connected to the first stage of the launcher. The second stage of the launcher includes augmenting conductors 30 and 32. A capacitive power supply 34 which includes capacitor array 36 and crowbar rectifier array 38 is connected between augmenting conductor 30 and projectile launching rail 12. Diode or diode array 40 serves as a rectifying means to connect projectile launching rail segments 10a and 10b and to conduct projectile launching current from the first stage to the second stage once armature 16 has moved beyond the first stage. It should be understood that while Figure 1 illustrates only the first two stages of a launcher, additional stages may be added to achieve a desired exit velocity level.

The operation of the launcher of Figure 1 is as follows.  When firing is desired, all capacitive power supplies are precharged to their optimum voltage by conventional charging means, not shown, to yield the desired launch current magnitude and variation with time and barrel location.  The projectile can be preloaded as shown and firing commences with the closure of firing switch 26 in the breech power supply.  Depending on the exact circuit parameters, the current will rise to its maximum in, for example, tens or hundreds of microseconds at which point the energy which is initially stored capacitively will be primarly stored in the inductance of the first stage augmenting conductors plus the additional inductance provided by that length of the firing rails which at a particular point in time conducts the projectile propelling current.  As the projectile is propelled, the current variation versus barrel location will be about as shown in Figure 2.

It should be observed that the second stage power supply cannot prematurely discharge energy because the interstage or rail gap rectifier assembly 40 blocks reverse flow of current toward the breech while forward flow of current is prevented by the circuit being open at the muzzle end.  The successive capacitors in the power supplies for each stage thus cannot produce reverse current flow toward the breech because of diode assemblies 40. Forward current flow toward the muzzle, if there are additional stages, is prevented by increasing charge voltages on successive capacitor banks toward the muzzle. However, as soon as the projectile armature or driving arc bridges the second stage rail segments, the second stage current automtically starts to flow and again builds to its maximum.  The time required to reach full stage current can be shortened for the high velocity stages near the muzzle end of a launcher by decreasing series inductance and capacitance.  In Figure 2, point A represents the breech end of the launcher of Figure 1 and curve 42 shows the projectile driving current being delivered by the first stage power supply 22. At point B, the armature or driving plasma has reached the second stage rail segment 10b and curve 44 illustrates the second stage current contribution. The actual driving current, curve 46, is now equal to the sum of the current still being delivered by the first stage power supply plus the second stage current. If the maximum current level obtained by the first stage power supply is the maximum allowable due to the barrel and projectile mechanical and/or thermal limitations, then successive stage current peaks should generally be about of the same value in order to attain the desired velocity with a minimum barrel length. Furthermore, the force on the projectile is proportional to the current squared and the higher the root mean square (rms) value of the current, the higher the average force and hence the shorter the barrel required for attainment of a desired velocity. For a given peak current, the rms value is raised by not allowing the minimum driving current to decay excessively which is accomplished by optimizing the system to inject the next stage current as soon as total driving current has decayed to a still acceptable lower limit.

It should be noted that although the capacitors of each capacitive power supply are crowbarred by passive rectifier assemblies 28 and 38, other crowbar schemes may be employed, for example, ignitrons may be suitably triggered to short across the capacitors and thus prevent the capacitors from being recharged during the accelerating sequence. The illustrated rectifier solution is considered preferable since it eliminates the requirement for crowbar switch control circuitry. It is also feasible to operate without any crowbarring means by operating each RLC circuit in an over damped mode but this is likely to result in reduced efficiency, a slower buildup to maximum current peaks and a system with reduced versatility.

Where ultra high velocity projectiles are required, for example for inertial confinement fusion applications, arc drive will be used; the mass to be accelerated will be small, for example 2.5 grams including the bore sealing and ablating sabot; and the bore will also be relatively small. Because of the small bore and arc drive, the projectile will be accelerated by a single armture current path and only external augmentation schemes as employed in this approach are feasible.

To illustrate the advantages of the proposed multi-stage, capacitor driven, self augmented launcher of Figure 1, system parameters have been calculated under assumed idealized conditions including neglible resistance and friction, and capacitive power supplies optimally located to yield a given rms driving current. If one assumes a desired exit velocity of 50 km/sec., a total propelled mass of 2.5 grams, a propelling current of 100,000 amps rms, and an inductance of the projectile launching rails alone of 0.5 microhenries per meter, then the required barrel length for an unaugmented configuration is 1250 meters. Using single external augmentation as shown in Figure 1, this barrel length can be calculated to be reduced to about 417 meters. If double external augmentation is used, the barrel length is further reduced to about 250 meters. In order to achieve the same exit velocity in an unaugmented configuration with a barrel length of 250 meters, the propelling current would have to be increased to 224,000 amps rms. The higher current required for the unaugmented case will in turn generate far higher resistive losses, will result in far faster rail deterioration, will require about 2.25 times as many parallel rectifiers and may cause far faster ablation at the back of the projectile sealing sabot.

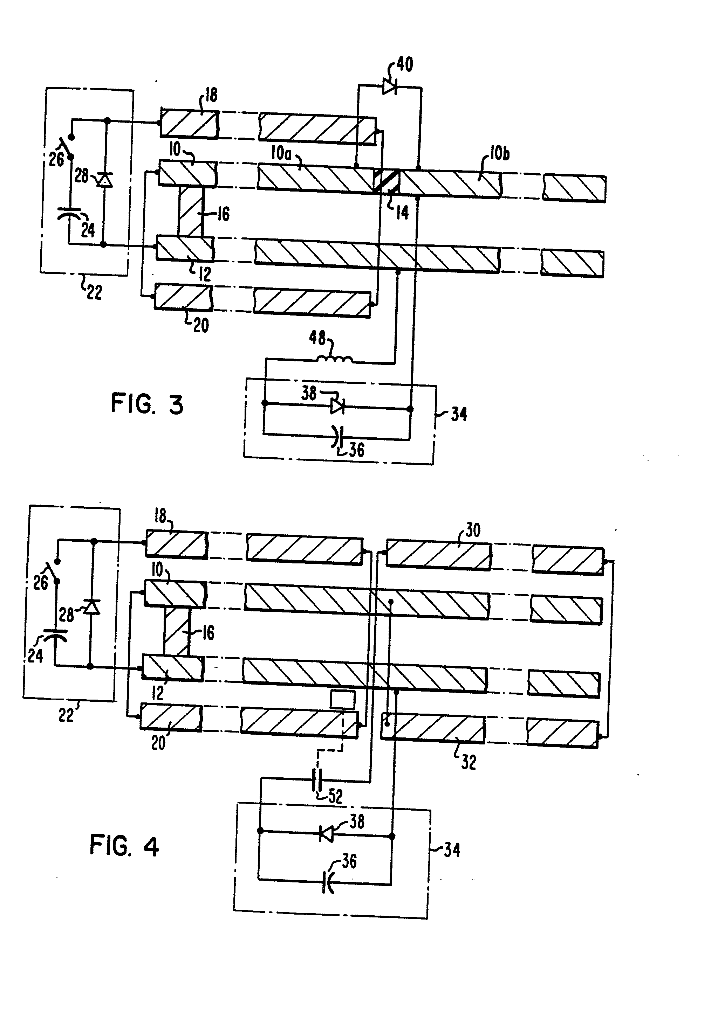

Figure 3 is a schematic diagram of a multi-stage capacitor driven electromagnetic launcher having its second stage augmented in accordance with an alternative embodiment of this invention. In this embodiment, inductor 48 has been inserted in series with the second stage capacitive power supply 34 to store energy and condition the power flow. Alternatively, this function may be performed by designing busing which has the desired inductance. Such stage power supplies as 34, using external series inductance, may be advantageously employed toward the muzzle, while rail stages at or nearer the breech use augmenting conductors to both store inductive energy and control current flow. In the augmented system of Figure 1, the augmenting rails perform these energy storing and controlling functions and additionally utilize their flux density to increase the force on the projectile.

The launchers of Figures 1 and 3 show rectifier assemblies 40 located only at the discontinuities or insulation gaps between segments of projectile launching rail 10, with projectile launching rail 12 being continuous. It should be understood however that oppositely directed rectifiers may be added for redundancy if corresponding rail discontinuties are provided in projectile launching rail 12. This will allow failure by shorting of a rectifier assembly without affecting performance, that is, as long as at least one assembly remains operative at each segmenting gap pair, with the other failed, the one acting as a shorting means across its insulation gap will not prevent proper system operation.

A very important feature of the proposed multi-stage launchers of Figures 1 and 3 is the elimination of all switches except the firing switch 26. All capacitive power supplies except the breech power supply are triggered by the arrival of the armature or arc 16 to short across the beginning of the respective propulsion rail bore. If it is desired to obtain better exit velocity control, this can be accomplished by deliberately attaining and measuring an excessive velocity and then dumping all or some of the final capacitive stages or by providing switching to prevent firing of one or more of the final stages or by providing switching to reduce current flow from selected stage power supplies.

Although the invention has been directed to the attainment of ultra high velocities in relatively small bore launchers, for example, velocities which may be sufficient to approach inertial confinement fusion conditions, it should be observed that the invention is also well suited for lower velocities such as are now being obtained with two stage gas guns, an expensive and rather dangerous propulsion procedure. Furthermore, the proposed augmented systems can also be used for lower velocity applications involving the acceleration of heavier masses in larger bores. For such configurations, sliding metallic armatures are appropriate and internally augmented configurations can be utilized to attain the required high forces at moderate current levels.

The launchers of Figures 1 and 3, which show a rectifier assembly 40 bridging insulation 14, are considered to be preferable configurations of the invention. However, it should be understood that the launchers can be operated by removing rectifier assembly 40 which results in arcing across the interrail gap or insulation 14, if there is remaining energy inductively stored in the rail stage just traversed by a projectile. Alternatively, the launchers can operate without such arcing if the current has decayed to zero or has been interrupted at a current zero prior to passage of the conducting armature into a successive stage. In this instance, a conducting metallic armature would be used so that there is no arc to short across the rails. Of course this mode with currents going to zero will result in an undesirably lower rms current.

Figure 4 is a schematic diagram of an alternative embodiment of the invention wherein projectile launching rails 10 and 12 are uninterrupted. In this embodiment, very accurate timing of the triggering of successive capacitive power supplies is required as premature power supply application would result in reversed current flow thus decelerating the projectile with most likely drastic results. Therefore a switch or other circuit closing means 52 must be included in series with each capacitive power supply beyond the breech power supply to serve as means for connecting successive power supplies to their respective stages. The operation of this switch must be accurately controlled and therefore sensor 54 has been supplied to detect the position of armature 16 and to produce a signal which controls the operation of switching means 52 such that power supply 34 is connected to the second stage of the launcher when the armature has reached a predetermined position along the projectile launching rails 10 and 12.

The final velocity limitation of the proposed augmented rail, capacitor driven, multi-stage electromagnetic launcher will most likely be premature voltage breakdown between opposing rails initiated either by breakdown through the intervening space or, more likely, surface breakdown across the insulation which in conjunction with the propulsion rails, confines the bore. With the completely self triggered systems, such a breakdown could occur either after charging the capacitors but before actual firing or simply ahead of the projectile during acceleration. In either case, the parasitic arc will travel toward the muzzle and will trigger and discharge any successive stage power supplies so that the desired projectile velocity will not be obtained. Such a failure will most likely be initiated in the high velocity barrel region where capacitors must have increasingly high charge voltages so that they will rapidly discharge the stage energy even though the driving armature or arc back electromotive force (emf) will be quite high, for example, about 12.5 kilovolts in a twice augmented configuration at 100 kiloamps and 50 km/sec. The precise limitations imposed by this likelihood of premature arcing will be a function of many variables such as: the size of the bore configuration; the surface condition of the rails; the type, condition, cleanliness and configuration of the insulation; a vacuum or gas environment; the time duration of the high voltage; the voltage gradients in space and insulation; the presence of particles; etc.

Several novel means are believed feasible for extending the voltage capability and therefore the velocity of the proposed launchers. These means include:

1. The higher voltage stages for the muzzle end may additionally include a make switch in series with the capacitors, as shown in Figure 4, and this switch would be closed just prior to the arrival of the projectile in the respective stage rails. This limits the time duration during which voltage is impressed across the rail gap and lessens the opportunities for premature breakdown.

2. The final or high velocity stages may be deliberately operated at lower current levels which reduces the back emf and hence the required capacitor charge voltages.

3. The final or high velocity stages may have less or no augmentation which again reduces the back emf and therefore the capacitor voltage levels.

4. If it is established that a conducting armature can be operated at ultra high velocities, either by sliding conduction or by very short arcs from the armature to the rails, then a rail design such as illustrated by Figure 5 may be practical. In this design, longitudinal grooves 56 are provided in projectile launching rails 10 and 12 to guide the armature and projectile package. This provides the freedom to design for long surface insulation paths 58 and 60 and would also result in far less heating and deterioration of the insulation. All of these factors inhibit the likelihood of insulation surface flashover.

For both schemes 2 and 3 above, successive capacitor banks may be charged to lower rather than higher voltages and to then prevent premature forward current flow from a higher voltage bank to a successively located lower voltage bank, the interstage rectifier assemblies 40 can be comprised of triodes triggered to conduct only as soon as the driving arc or armature bridges the respective rail gap. This scheme may also be employed generally, in lieu of self triggered diodes. Another alternative solution to prevent such forward flow of current into downstream capacitors is to provide a series rectifier for capacitor banks which may be affected by this undesired current flow.

In summary, the launchers of this invention have the following advantages over competitive high velocity electromagnetic launchers:

1. The required high acceleration forces are obtained at lower propulsion current levels which is expected to reduce; rail and insulation wear, resistive losses, switching and rectifying complexities and costs, rail heating, busing weight, etc.

2. In the idealized, self-triggered version, the need for switch timing is eliminated.

3. The high forces attained will allow use of shorter launchers and shorter projectile acceleration durations compared to unaugmented configurations with the same launching current.

4. Separate and expensive high current inductors to control current flow and temporarily store energy are not required in the augmented configurations as these functions are performed by the augmenting conductors. Additionally, the augmenting conductor's magnetic flux which stores energy also greatly increases the projectile acceleration forces.

5. As in other multi-stage power supply systems, the high propulsion currents need not be conducted over long barrel lengths and energy stored in each stage can be completely drained and delivered to propel the projectile, with the exception of some of the energy in the last stages which can be dissipated in a muzzle bridging circuit. The shorter high current busing, short active current conducting rail length and substantially complete drainage of stage inductive energy all result in increasing overall energy efficiency.

**0162983**

It will be observed that the graph of Figure 2 indicates a rapid rise of current, and this behavior is more likely to be characteristic of singly augmented launchers as illustrated in Figure 1. These configurations, especially with short launcher stages, have low initial inductance and therefore a higher oscillation frequency, before crowbarring, and correspondingly a fast current rise. With multiple augmentation and particularly with longer stages, the oscillation frequency can be far lower thus resulting in a far less steep current rise in the stages which is likely to be preferable in maintaining the integrity of the projectile and in reducing undesired effects brought on by current concentration due to skin effects in the rails and buses. These latter undesired effects such as excessive localized heating and excessive resistance may also be lessened by using multi-conductor, transposed driving and augmenting rails.

Although the present invention has been described in terms of what are at present believed to be the preferred embodiments, it will be apparent to those skilled in the art that various modifications may be made without departing from the scope of this invention. It is therefore intended that the appended claims cover all such modifications.

0162983

14

CLAIMS:

1. An electromagnetic projectile launcher comprising:

a first pair (10, 12) of generally parallel conductive rails;

conductor magnet (16) for conducting current between said first pair of rails in operation and for propelling a projectile along said rails;

one rail (10) of said first pair of rails by segmented (10a, 10b) to form a plurality of launcher stages, additional conductors (18, 20) for connection to a fleshtone power supply disposed in groups adjacent to at least one of said stages formed by said first pair (10, 12) of conductive rails and connected to said first pair (10, 12) of conductive rails such that current flow in each of said additional conductors is in the same direction as current flow in an adjacent one of said first pair (10, 12) of conductive rails.

2. An electromagnetic projectile launcher as recited in claim 1, characterized by:

a rectifier (14) connected between adjacent segments (10a, 10b) of the segmented one of said first pair (10, 12) of conductive rails.

3. An electromagnetic projectile launcher as recited in claim 1 or 2, further characterized by:

crowbar circuitry connected across each of said capacitive power supplies.

4. An electromagnetic projectile launcher as recited in claim 1, 2 or 3 characterized by:

said at least one power supply being capacitive;

an inductor for connection in series with at least one of said capacitive power supplies.

5. An electromagnetic projectile launcher as recited in any of the preceding claims, characterized by said conductor arrangement for conducting current includes a metallic armature and said first pair of conductive rails include confronting longitudinal grooves for guiding said metallic armature.

6. An electromagnetic projectile launcher as recited in any of the preceding claims, characterized by:

insulating material disposed between successive segments of said segmented rail wherein one surface of said insulating material conforms to the surface of said segmented rail which confronts the other rail of said first pair of rails.

FIG. 1

FIG. 5

FIG. 2

FIG. 3

FIG. 4